# EUROPEAN PATENT SPECIFICATION

(11) **EP 3 457 669 B1**
(45) Date of publication and mention of the grant of the patent: **07.07.2021**
(21) Application number: 18194305.1
(22) Date of filing: 13.09.2018
(51) Int. Cl.: H04L 29/08, H04W 4/02, H04W 4/33, H04W 4/021

(54) **METHOD, DEVICE AND COMPUTER-READABLE STORAGE MEDIUM FOR SENDING MESSAGES**
VERFAHREN, VORRICHTUNG UND COMPUTER-LESBARES SPEICHERMEDIUM ZUM SENDEN VON NACHRICHTEN
PROCÉDÉ, DISPOSITIF ET SUPPORT D'ENREGISTREMENT LISIBLE PAR ORDINATEUR D'ENVOI DE MESSAGES

(30) Priority: 18.09.2017 CN 201710839670
(43) Date of publication of application: 20.03.2019
(73) Proprietor: Beijing Xiaomi Mobile Software Co., Ltd., Beijing 100085 (CN)
(72) Inventor: XIE, Yan, Beijing, Beijing 100085 (CN)
(74) Representative: dompatent von Kreisler Selting Werner - Partnerschaft von Patent- und Rechtsanwälten mbB

(56) References cited:
- CN-A- 104 394 061

## Description

### TECHNICAL FIELD

The present disclosure generally relates to a computer technology field, and more particularly to a method and a device for sending messages.

### BACKGROUND

With development of the mobile communication technology, functions of mobile communication technology become more and more powerful. When a user logs in a same account on different terminals, a server may send same information (for example, communication information, advertisement information, notification information, and the like) to the different terminals logged into the target account, such that the user may view the information on different terminals. At the same time, the server may send an instruction message to a terminal last operated by the user, such that the terminal may perform a prompt (such as a ring, a vibration, a flicker and the like) after receiving the instruction message.

During implementing the present disclosure, the inventor found at least following problems.

If a last operation of the user is performed on a computer, and the user is more close to a mobile phone, for example, the user leaves the computer with the mobile phone, the mobile phone may not receive the instruction message sent from the server when the user receives new information, thus the mobile phone cannot prompt the user immediately receiving the information, reducing the immediacy of the user to obtain information.
CN 104394061 A discloses a communication message pushing method and device, and relates to the technical field of computers. The communication message pushing method comprises: detecting whether a user account number is stored on at least two terminals when a communication message is pushed to the user account number; obtaining status information uploaded by each terminal before if it is detected that the user account number is stored on at least two terminals, the status information including at least one status parameter indicating a condition that a user uses a terminal; in accordance with the status information of each terminal, determining a terminal having the shortest distance to a current position of the user; and pushing the communication message to the determined terminal. A terminal having the shortest distance to the user is determined by the obtaining of status information uploaded by each terminal before, and the communication message is pushed to the determined terminal. Therefore, the invention solves the technical problem: in the related art, a user may not obtain a communication message at the first time because a default device is not near to the user. The method and the device realize an effect of ensuring that a user may obtain an important message at the first time.

### SUMMARY

In order to overcome the problem of low immediacy of the user to obtain information in the related art, the present disclosure provides a method according to independent claim 1, a corresponding device according to independent claim 8, and a corresponding computer-readable storage medium according to independent claim 15 for sending messages. Preferred embodiments are set out in the dependent claims. The technical solution of the present disclosure is as follows.

According to a first aspect of embodiments of the present disclosure, there is provided a method for sending messages, including: obtaining a target message to be sent to a target account; determining a target terminal nearest to a reference terminal corresponding to the target account from terminals logged into the target account; and in response to the determining, sending the target message to the terminals logged into the target account, and sending an instruction message to the target terminal, in which the instruction message is configured to instruct the target terminal to send out a prompt signal for the target message.

Preferably, determining a target terminal nearest to a reference terminal corresponding to the target account from terminals logged into the target account includes: obtaining location information of each terminal logged into the target account and location information of the reference terminal corresponding to the target account; and determining the target terminal nearest to the reference terminal according to the location information of each terminal logged into the target account and the location information of the reference terminal.

Preferably, the location information includes a location coordinate, a building involved, and floor information in the building involved; determining the target terminal nearest to the reference terminal according to the location information of each terminal logged into the target account and the location information of the reference terminal includes: determining a target terminal having a shortest movement distance from the reference terminal in the terminals logged into the target account according to the location information of each terminal logged into the target account and the location information of the reference terminal.

Preferably, determining a target terminal nearest to a reference terminal corresponding to the target account from terminals logged into the target account includes: obtaining signal strength information between each terminal logged into the target account and the reference terminal corresponding to the target account; and determining the target terminal nearest to the reference terminal based on the signal strength information corresponding to each terminal logged into the target account.

Preferably, sending the target message to the terminals logged into the target account includes: sending the target message to a part of terminals logged into the target account, in which each of the part of terminals has a distance less than a preset threshold from the reference terminal.

Preferably, determining a target terminal nearest to a reference terminal corresponding to the target account from terminals logged into the target account includes: if a wearing message sent from the reference terminal corresponding to the target account is received in a preset period before obtaining the target message, determining the target terminal nearest to the reference terminal corresponding to the target account from the terminals logged into the target account. The wearing message is periodically sent by the reference terminal in a situation that the reference terminal detects that the reference terminal is worn by a user.

Preferably, the method further includes: if the wearing message sent from the reference terminal corresponding to the target account is not received in the preset period before obtaining the target message, determining the target terminal as the terminal which the user operates for the last time from the terminals logged into the target account.

According to a second aspect of embodiments of the present disclosure, there is provided a device for sending messages, including: an obtaining module, configured to obtain a target message to be sent to a target account; a determining module, configured to determine a target terminal nearest to a reference terminal corresponding to the target account from terminals logged into the target account; and a sending module, configured to, in response to the determination, send the target message to the terminals logged into the target account, and an instruction message to the target terminal, in which the instruction message is configured to instruct the target terminal to send out a prompt signal for the target message.

Preferably, the determining module is configured to: obtain location information of each terminal logged into the target account and location information of the reference terminal corresponding to the target account; and determine the target terminal nearest to the reference terminal according to the location information of each terminal logged into the target account and the location information of the reference terminal.

Preferably, the location information includes a location coordinate, a building involved, and floor information in the building involved. The determining module is configured to: determine a target terminal having a shortest movement distance from the reference terminal in the terminals logged into the target account according to the location information of each terminal logged into the target account and the location information of the reference terminal.

Preferably, the determining module is configured to: obtain signal strength information between each terminal logged into the target account and the reference terminal corresponding to the target account; and determine the target terminal nearest to the reference terminal based on the signal strength information corresponding to each terminal logged into the target account.

Preferably, the sending module is configured to: send the target message to a part of terminals logged into the target account, in which each of the part of terminals has a distance less than a preset threshold from the reference terminal.

Preferably, the determining module is configured to: if a wearing message sent from the reference terminal corresponding to the target account is received in a preset period before obtaining the target message, determine the target terminal nearest to the reference terminal corresponding to the target account from the terminals logged into the target account. The wearing message is periodically sent by the reference terminal in a situation that the reference terminal detects that the reference terminal is worn by a user.

Preferably, the determining module is further configured to: if the wearing message sent from the reference terminal corresponding to the target account is not received in the preset period before obtaining the target message, determine the target terminal as the terminal which the user operates for the last time from the terminals logged into the target account.

According to a third aspect of embodiments of the present disclosure, there is provided a computer readable storage medium, having at least one instruction, at least one program, a code set or an instruction set stored thereon. The least one instruction, the at least one program, the code set or the instruction set is configured to be loaded and performed by the processor to implement a method for sending messages according to embodiments of the first aspect of the present disclosure.

The technical solution provided by embodiments of the present disclosure may have following advantageous effects.

In embodiments of the present disclosure, the target message to be sent to the target account is obtained, the target terminal nearest to the reference terminal corresponding to the target account is determined from the terminals logged into the target account, the target message is sent to the terminals logged into the target account, and the instruction message is sent to the target terminal, in which the instruction message is configured to instruct the target terminal to send out a prompt signal for the target message, the reference terminal may be a frequently worn terminal set by the user, thus the terminal nearest to the reference terminal may be considered as the terminal nearest to the user, based on above processing, the terminal nearest to the user may send out the prompt signal for the target message to prompt the user to view the target message in time, thus improving immediacy of the user to obtain information.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for sending messages according to an exemplary embodiment.
Fig. 2 is a schematic diagram illustrating a method for sending messages according to an exemplary embodiment.
Fig. 3 is a schematic diagram illustrating a method for sending messages according to an exemplary embodiment.
Fig. 4 is a schematic diagram illustrating a device for sending messages according to an exemplary embodiment.
Fig. 5 is a schematic diagram illustrating a server according to an exemplary embodiment.

Specific embodiments of the present disclosure have been shown in the above drawings. Hereinafter, the description with more details will be given. The drawings and text description are not to limit the scope of ideas of the present disclosure by any way, but by reference to specific embodiments, the concept of the present disclosure is explained to a skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Embodiments of the present disclosure provide a method for sending messages. An implementation subject of the method is a server. The server may be a server having a function of sending information. For example, the server may be a back-end server of communication software.

The server may include components such a processor, a memory, a transceiver, and the like. The processor may be a CPU (Central Processing Unit), which may be configured to perform processing such as determining location information of a target terminal and the like. The memory may be a RAM (Random Access Memory), a Flash, and the like, configured to store received data, data required during processing, date generated during processing, and the like. For example, the memory may be configured to store location information of a reference terminal, location information of the target terminal, a wearing message of the reference terminal, and the like. The transceiver may be configured to perform data transmission with a terminal. For example, the transceiver may send a target message to the terminal, may send a prompt signal of the target message to the terminal. The transceiver may include an antenna, a match circuit, a modem, and the like.

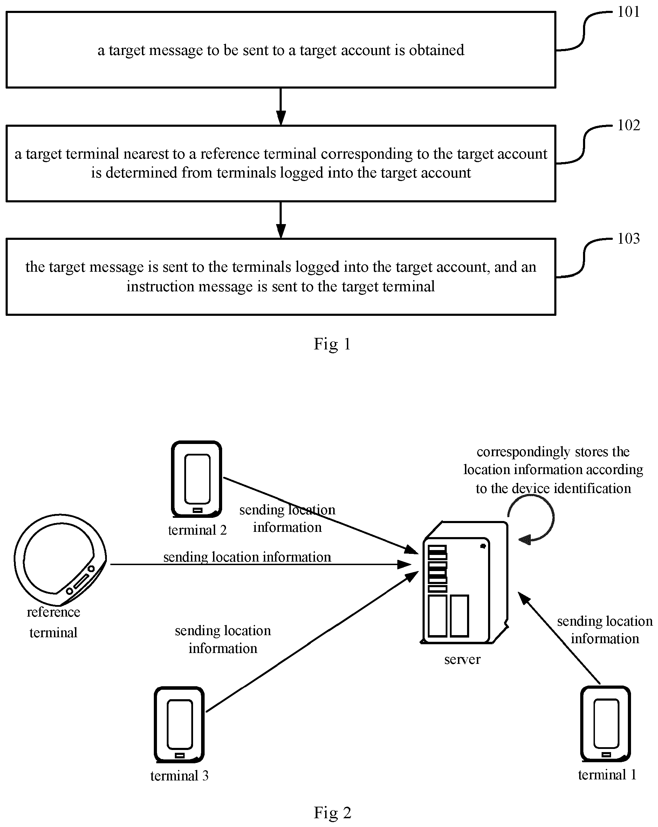

An exemplary embodiment of the present disclosure provides a method for sending messages. As illustrated in Fig. 1, the method may include followings.

At block 101, a target message to be sent to a target account is obtained.

In embodiments of the present disclosure, in many cases, a server of an application may send information to a certain registered account (i.e., the target account) of the application. For example, when the server receives communication information sent to the target account from other accounts, the target message to be sent to the target account is the communication information. For another example, when the server pushes news, advertisements and the like to the target account, the target message to be sent to the target account is the above news, advertisements and the like. For yet another example, when a certain terminal logged into the target account receives a phone call, a message, or an email, the server may be informed, and the server may send notification information to the target account, the target message to be sent to the target account is the above notification information.

At block 102, a target terminal nearest to a reference terminal corresponding to the target account is determined from terminals logged into the target account.

The reference terminal is a terminal that is set by the user and is bound with the target account for determining a location of the user. For example, the reference terminal may be a wearable device, such as a smart bracelet, smart shoes, and the like.

In embodiments of the present disclosure, as illustrated in Fig. 2, a process of bounding an account and the reference terminal is first described. The reference terminal may be pre-installed with a wearable device end program of the above application. When the user wants to bound the reference terminal with the target account, the above application may be started in a certain terminal, and may be connected to the reference terminal. For example, the above application may be connected to the reference terminal in a way such as Bluetooth, wireless network, and the like. And then the target account is logged in on the reference terminal via cooperation of the above application and the wearable device end program. A device identification of the reference terminal is obtained and sent to the server. The server records the device identification and an account identification of the target account correspondingly in a binding relationship table of the account and the reference terminal. After the reference terminal is bounded with the target account, the user may set a way of the reference terminal sending location information to the server via the wearable device end program. The way of the reference terminal sending location information to the server may be sending periodically or sending based on triggering. For example, the above way may be set as follows. The reference terminal may send the location information to the server every 10 minutes, or the reference terminal may send the location information to the server when the location information of the reference terminal changes. The server receives the location information of the reference terminal, and correspondingly stores the location information according to the device identification of the reference terminal.

When the user logs in the target account on a terminal, the terminal may periodically sends terminal status information of the terminal to the server. The terminal status information may include the location information of the terminal, signal strength of a signal received by the terminal and sent from the reference terminal corresponding to an account locally logged in, history operation information, and the like. For example, the history information may include a time point when the terminal last performs a user operation after the terminal logs in the target account. The user operation may be any user operation in the terminal.

After the server obtains the target message to be sent to the target account, the server obtains the terminal status information of the terminal having the target account logged in. And then, the server determines the target terminal nearest to the reference terminal corresponding to the target account according to the terminal status information.

Alternatively, the server may select the target terminal nearest to the reference terminal from the terminals logged into the target account according to the location information of the terminals. A corresponding processing process may be as follows. Location information of each terminal logged into the target account and location information of the reference terminal corresponding to the target account are obtained. The target terminal nearest to the reference terminal is determined according to the location information of each terminal logged into the target account and the location information of the reference terminal.

In embodiments of the present disclosure, after the server obtains the target message to be sent to the target account, the server obtains the terminal status information of the terminal having the target account logged in, and obtains location information from the terminal status information. The server obtains the binding relationship table of the account and the reference terminal, and obtains a device identification corresponding to the account identification of the target account. Then location information of a terminal corresponding to the device identification is found according to the device identification. The server obtains the location information of each terminal logged into the target account and the location information of the reference terminal. Then the server calculates a distance between each terminal logged into the target account and the reference terminal according to the above location information. A terminal (i.e., the target terminal) nearest to the reference terminal is determined. The above distance may be a crow-fly distance or a movement distance.

Alternatively, the server may select a target terminal having a shortest movement distance from the reference terminal. Different from the crow-fly distance, the movement distance is a length of a movement route between a certain terminal and the reference terminal. Correspondingly, the location information may include a location coordinate, a building involved, and floor information in the building involved and the processing at block 102 may be as follows. A target terminal having a shortest movement distance from the reference terminal is determined in the terminals logged into the target account according to the location information of each terminal logged into the target account and the location information of the reference terminal.

In embodiments of the present disclosure, the server obtains the location information of the reference terminal and the location information of each terminal logged into the target account, and obtains the location coordinate, the building involved, and the floor information in the building involved from the location information. Then, route lengths (i.e. the movement distance) of feasible routes from the reference terminal to each terminal logged into the target account according to above information. Then a terminal (i.e., the target terminal having a shortest movement distance from the reference terminal) corresponding to a feasible route having a shortest route length is determined. For example, terminal A is on the third floor, the user wears the reference terminal (i.e., the location information of the reference terminal is location information of the user) in a room on the fourth floor just above terminal A. A height between two floors is 2 meters. Terminal B is 8 meters away from the user on the fourth floor and is 5 meters away from an elevator. The server may obtain that a shortest movement distance between terminal A and the user is 12 meters, and that a shortest movement distance between terminal B and the user is 8 meters, thus terminal B is the target terminal.

Alternatively, the target terminal nearest to the reference terminal may be determined according to signal strength between terminals, and a corresponding processing process may be as follows. Signal strength information between each terminal logged into the target account and the reference terminal corresponding to the target account is obtained respectively. The target terminal nearest to the reference terminal is determined based on the signal strength information corresponding to each terminal logged into the target account.

In embodiments of the present disclosure, after a terminal logs in an account, the server may send a device identification of the reference terminal corresponding to the account to the terminal. The terminal may store the device identification. The reference terminal broadcasts a detection signal according to a preset period. The detection signal carries the device identification of the reference terminal. After another terminal receives the detection signal, the terminal may extract the device identification in the detection signal. If the extracted device identification is same as locally stored device identification, it can be determined that the detection signal is sent from a reference terminal corresponding to a locally logged in account of the terminal. And then signal strength information of the detection signal may be determined, and the signal strength information is reported to the server as the terminal status information together with the locally logged in account. The server may compare signal strength information sent from each terminal logged into the account locally logged in, and determines a terminal corresponding to strongest signal strength information as the target terminal nearest to the reference terminal.

Alternatively, the processing is performed when it is determined that the reference terminal is worn. Correspondingly, the processing process at block 102 may be as follows.

If a wearing message sent from the reference terminal is received in a preset period before obtaining the target message, the target terminal nearest to the reference terminal is determined from the terminals logged into the target account according to the location information of each terminal logged into the target account and the location information of the reference terminal.

The wearing message is periodically sent to a server by the reference terminal in a preset manner when the reference terminal detects that the reference terminal is worn by a user.

In embodiments of the present disclosure, the server may preset a preset time period. If the server receives the wearing message sent from the reference terminal in a preset period before obtaining the target message, the server determines the target terminal nearest to the reference terminal from the terminals logged into the target account according to the location information of each terminal logged into the target account and the location information of the reference terminal. The preset period may be a preset length of time for the server to determine whether the user wears the reference terminal. For example, the terminal logged into the target account periodically sends terminal information to the server, the reference terminal periodically sends a wearing message to the server, the preset period may be any length of time period not less than both a time period during which the server receives the terminal information and a time period during which the server receives the wear information.

Alternatively, when it is determined that the reference terminal is not worn, the processing process of determining the target terminal at block 102 may be as follows. If the wearing message sent from the reference terminal is not received in the preset period before obtaining the target message, the target terminal is determined as the terminal which the user operates for the last time from the terminals logged into the target account.

In embodiments of the present disclosure, if the server does not receive the wearing message sent from the reference terminal in the preset period before obtaining the target message, the server obtains the terminal status information of the terminal logged into the target account. Then, a time point when the terminal last performs a user operation after the terminal logs in the target account from the above terminal status information. The user operation may be any user operation in the terminal. The terminal (i.e., the target terminal) that the user operates for the last time is determined according to above time point.

At block 103, the target message is sent to the terminals logged into the target account, and an instruction message is sent to the target terminal.

The instruction message is configured to instruct the target terminal to send out a prompt signal for the target message.

In embodiments of the present disclosure, a correspondence relationship between types of the target message and different prompt signals may be pre-stored in each terminal. The server sends the target message to the terminals logged into the target account, and sends the instruction message to the target terminal. After the target terminal receives the target message and the instruction message sent from the server, the target terminal obtains a type of the target message, and then the target terminal search for a prompt signal corresponding to the type of the target message, and sends out the prompt signal. For example, the prompt signal may be a ring, a vibration, a flicker and the like.

Alternatively, the server may send the target message only to a terminal that is closer to the reference terminal, and a corresponding processing process may be as follows. The target message is sent to a part of terminals logged into the target account. Each of the part of terminals has a distance less than a preset threshold from the reference terminal.

The distance may be a crow-fly distance, a movement distance, and the like.

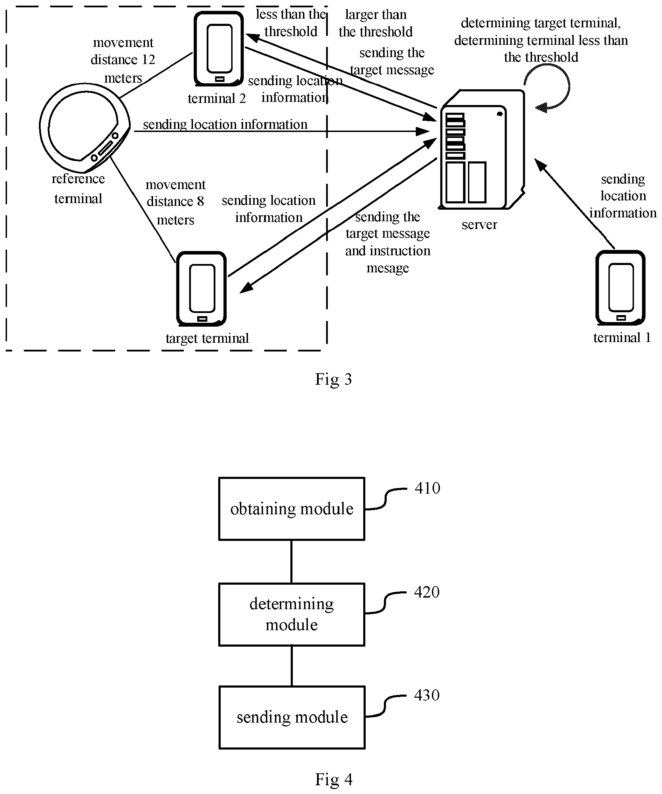

As illustrated in Fig. 3, in embodiments of the present disclosure, a threshold may be pre-stored in the server, configured to determine whether a distance between other terminals and the reference terminal is short enough. The server may determine a terminal whose distance from the reference terminal is less than the threshold from the terminals logged into the target account. The server obtains the location information of the terminals logged into the target account, and the server determines the terminal whose distance from the reference terminal is less than the threshold according to the above location information. Then the server sends the target message to each determined terminal.

In embodiments of the present disclosure, the target message to be sent to the target account is obtained, the target terminal nearest to the reference terminal corresponding to the target account is determined from the terminals logged into the target account, the target message is sent to the terminals logged into the target account, and the instruction message is sent to the target terminal, in which the instruction message is configured to instruct the target terminal to send out a prompt signal for the target message, the reference terminal may be a frequently worn terminal set by the user, thus the terminal nearest to the reference terminal may be considered as the terminal nearest to the user, based on above processing, the terminal nearest to the user may send out the prompt signal for the target message to prompt the user to view the target message in time, thus improving immediacy of the user to obtain information.

An exemplary embodiment of the present disclosure provides a device for sending messages. As illustrated in Fig. 4, the device may include an obtaining module 410, a determining module 420 and a sending module 430.

The obtaining module 410 is configured to obtain target message to be sent to a target account.

The determining module 420 is configured to determine a target terminal nearest to a reference terminal corresponding to the target account from terminals logged into the target account.

The sending module 430 is configured to send the target message to the terminals logged into the target account, and to send an instruction message to the target terminal. The instruction message is configured to instruct the target terminal to send out a prompt signal for the target message.

Alternatively, the determining module 420 is configured to: obtain location information of each terminal logged into the target account and location information of the reference terminal corresponding to the target account; and determine the target terminal nearest to the reference terminal according to the location information of each terminal logged into the target account and the location information of the reference terminal.

Alternatively, the location information includes a location coordinate, a building involved, and floor information in the building involved. The determining module 420 is configured to: determine a target terminal having a shortest movement distance from the reference terminal in the terminals logged into the target account according to the location information of each terminal logged into the target account and the location information of the reference terminal.

Alternatively, the determining module 420 is configured to: obtain signal strength information between each terminal logged into the target account and the reference terminal corresponding to the target account; and determine the target terminal nearest to the reference terminal based on the signal strength information corresponding to each terminal logged into the target account.

Alternatively, the sending module 430 is configured to: send the target message to a part of terminals logged into the target account. Each of the part of terminals has a distance less than a preset threshold from the reference terminal.

Alternatively, the determining module 420 is configured to: if a wearing message sent from the reference terminal corresponding to the target account is received in a preset period before obtaining the target message, determine the target terminal nearest to the reference terminal corresponding to the target account from the terminals logged into the target account. The wearing message is periodically sent by the reference terminal in a situation that the reference terminal detects that the reference terminal is worn by a user.

Alternatively, the determining module 420 is further configured to: if the wearing message sent from the reference terminal corresponding to the target account is not received in the preset period before obtaining the target message, determine the target terminal as the terminal which the user operates for the last time from the terminals logged into the target account.

In embodiments of the present disclosure, the target message to be sent to the target account is obtained, the target terminal nearest to the reference terminal corresponding to the target account is determined from the terminals logged into the target account, the target message is sent to the terminals logged into the target account, and the instruction message is sent to the target terminal, in which the instruction message is configured to instruct the target terminal to send out a prompt signal for the target message, the reference terminal may be a frequently worn terminal set by the user, thus the terminal nearest to the reference terminal may be considered as the terminal nearest to the user, based on above processing, the terminal nearest to the user may send out the prompt signal for the target message to prompt the user to view the target message in time, thus improving immediacy of the user to obtain information.

It should be noted that, the device for sending messages provided in above embodiments is exemplified by the division of the functional modules when sending information. In practical use, the above functions can be assigned by different functional modules as needed, that is, external structure of the device is divided into different functional modules to realize all or part of the functions described above. In addition, the device for sending messages provided in above embodiments belongs to a same concept with that of embodiments of the method for sending messages, specific implementation process of which can refer to embodiments of the method and will not be elaborated herein.

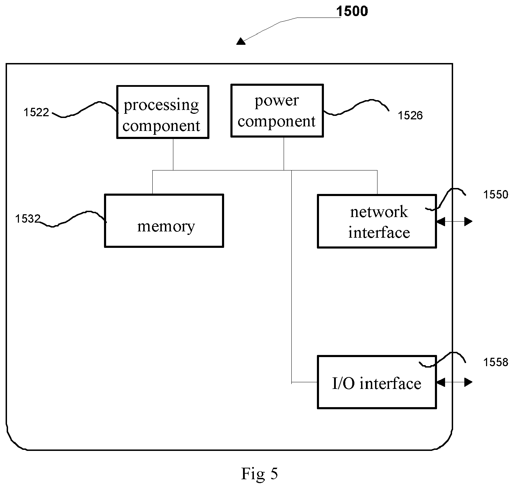

Fig. 5 is a schematic diagram illustrating a device for sending messages 1500 according to an exemplary embodiment. For example, the device 1500 for sending messages may be provided as a server. As illustrated in Fig. 5, the device 1500 may include a processing component 1522, and may further include one or more processor, and memory resources represented by memory 1532. The memory 1532 is configured to store instructions executable by the processing component 1522. For example, the instructions may be an application. The application stored in the memory 1532 may include one or more modules. Each of the one or more modules corresponds to one group of instructions. In addition, the processing component 1522 is configured to execute the instructions to implement above method for sending messages.

The device 1500 may further include a power component 1526 configured to perform power management of the device 1500, a wired or wireless network interface 1550 configured to connect the device 1500 to a network, and an input/output (I/O) interface 1558. The device 1500 may operate an operating system stored in the memory 1532. For example, the operating system may be Windows ServerTM, Mac OS XTM, UnixTM, LinuxTM, FreeBSDTM, or the like.

The device 1500 may include a memory and one or more programs. The one or more programs may be stored in the memory, and is configured to be executed by one or more processors. The one or more programs may include instructions configured to perform following operations.

A target message to be sent to a target account is obtained.

Location information of each terminal logged into the target account and location information of the reference terminal corresponding to the target account are obtained.

The target terminal nearest to the reference terminal is determined according to the location information of each terminal logged into the target account and the location information of the reference terminal.

The target message is sent to the terminals logged into the target account, and an instruction message is sent to the target terminal. The instruction message is configured to instruct the target terminal to send out a prompt signal for the target message.

Alternatively, sending the target message to the terminals logged into the target account includes: sending the target message to a part of terminals logged into the target account. Each of the part of terminals has a distance less than a preset threshold from the reference terminal.

Alternatively, determining a target terminal nearest to a reference terminal corresponding to the target account from terminals logged into the target account includes: if a wearing message sent from the reference terminal corresponding to the target account is received in a preset period before obtaining the target message, determining the target terminal nearest to the reference terminal corresponding to the target account from the terminals logged into the target account. The wearing message is periodically sent by the reference terminal in a situation that the reference terminal detects that the reference terminal is worn by a user.

Alternatively, the instructions is configured to further perform: if the wearing message sent from the reference terminal corresponding to the target account is not received in the preset period before obtaining the target message, determining the target terminal as the terminal which the user operates for the last time from the terminals logged into the target account.

Alternatively, the location information includes a location coordinate, a building involved, and floor information in the building involved. Determining the target terminal nearest to the reference terminal according to the location information of each terminal logged into the target account and the location information of the reference terminal includes: determining a target terminal having a shortest movement distance from the reference terminal in the terminals logged into the target account according to the location information of each terminal logged into the target account and the location information of the reference terminal.

In embodiments of the present disclosure, the target message to be sent to the target account is obtained, the target terminal nearest to the reference terminal corresponding to the target account is determined from the terminals logged into the target account, the target message is sent to the terminals logged into the target account, and the instruction message is sent to the target terminal, in which the instruction message is configured to instruct the target terminal to send out a prompt signal for the target message, the reference terminal may be a frequently worn terminal set by the user, thus the terminal nearest to the reference terminal may be considered as the terminal nearest to the user, based on above processing, the terminal nearest to the user may send out the prompt signal for the target message to prompt the user to view the target message in time, thus improving immediacy of the user to obtain information.

Another exemplary embodiment of the present disclosure provides a computer readable storage medium.

The computer readable storage medium has at least one instruction, at least one program, a code set or an instruction set stored thereon. The least one instruction, the at least one program, the code set or the instruction set is loaded and performed by a processor to implement a method for sending messages in above method embodiments.

Other embodiments of the invention will be apparent to those skilled in the art from consideration of the specification and practice of the invention disclosed here. It is intended that the specification and examples be considered as exemplary only, with the scope of the invention being indicated by the following claims.

## Claims

1. A method for sending messages, comprising:
obtaining (101) a target message to be sent to a target account;
determining (102) a target terminal nearest to a reference terminal corresponding to the target account from terminals logged into the target account; **characterized in that**, in response to the determining,
sending (103) the target message to the terminals logged into the target account, and sending an instruction message to the target terminal, wherein the instruction message is configured to instruct the target terminal to send out a prompt signal for the target message.

2. The method according to claim 1, wherein determining (102) a target terminal nearest to a reference terminal corresponding to the target account from terminals logged into the target account comprises:
obtaining location information of each terminal logged into the target account and location information of the reference terminal corresponding to the target account; and
determining the target terminal nearest to the reference terminal according to the location information of each terminal logged into the target account and the location information of the reference terminal.

3. The method according to claim 2, wherein the location information comprises a location coordinate, a building involved, and floor information in the building involved;
determining (102) the target terminal nearest to the reference terminal according to the location information of each terminal logged into the target account and the location information of the reference terminal comprises:
determining a target terminal having a shortest movement distance from the reference terminal in the terminals logged into the target account according to the location information of each terminal logged into the target account and the location information of the reference terminal.

4. The method according to any one of claims 1 to 3, wherein determining (102) a target terminal nearest to a reference terminal corresponding to the target account from terminals logged into the target account comprises:
obtaining signal strength information between each terminal logged into the target account and the reference terminal corresponding to the target account; and
determining the target terminal nearest to the reference terminal based on the signal strength information corresponding to each terminal logged into the target account.

5. The method according to any one of claims 1 to 4, wherein sending (103) the target message to the terminals logged into the target account comprises:
sending the target message to a part of terminals logged into the target account, wherein each of the part of terminals has a distance less than a preset threshold from the reference terminal.

6. The method according to any one of claims 1 to 5, wherein determining (102) a target terminal nearest to a reference terminal corresponding to the target account from terminals logged into the target account comprises:
if a wearing message sent from the reference terminal corresponding to the target account is received in a preset period before obtaining the target message, determining the target terminal nearest to the reference terminal corresponding to the target account from the terminals logged into the target account;
wherein the wearing message is periodically sent by the reference terminal in a situation that the reference terminal detects that the reference terminal is worn by a user.

7. The method according to claim 6, further comprising:
if the wearing message sent from the reference terminal corresponding to the target account is not received in the preset period before obtaining the target message, determining the target terminal as the terminal which the user operates for the last time from the terminals logged into the target account.

8. A device for sending messages, comprising:
an obtaining module (410), configured to obtain a target message to be sent to a target account;
a determining module (420), configured to determine a target terminal nearest to a reference terminal corresponding to the target account from terminals logged into the target account; and **characterized by**
a sending module (430), configured to send, in response to the determination, the target message to the terminals logged into the target account, and an instruction message to the target terminal, wherein the instruction message is configured to instruct the target terminal to send out a prompt signal for the target message.

9. The device according to claim 8, wherein the determining module (420) is configured to:
obtain location information of each terminal logged into the target account and location information of the reference terminal corresponding to the target account; and
determine the target terminal nearest to the reference terminal according to the location information of each terminal logged into the target account and the location information of the reference terminal.

10. The device according to claim 9, wherein the location information comprises a location coordinate, a building involved, and floor information in the building involved;
the determining module (420) is configured to:
determine a target terminal having a shortest movement distance from the reference terminal in the terminals logged into the target account according to the location information of each terminal logged into the target account and the location information of the reference terminal.

11. The device according to any one of claims 8 to 10, wherein the determining module (420) is configured to:
obtain signal strength information between each terminal logged into the target account and the reference terminal corresponding to the target account; and
determine the target terminal nearest to the reference terminal based on the signal strength information corresponding to each terminal logged into the target account.

12. The device according to any one of claims 8 to 11, wherein the sending module (430) is configured to:
send the target message to a part of terminals logged into the target account, wherein each of the part of terminals has a distance less than a preset threshold from the reference terminal.

13. The device according to any one of claims 8 to 12, wherein the determining module (420) is configured to:
if a wearing message sent from the reference terminal corresponding to the target account is received in a preset period before obtaining the target message, determine the target terminal nearest to the reference terminal corresponding to the target account from the terminals logged into the target account;
wherein the wearing message is periodically sent by the reference terminal in a situation that the reference terminal detects that the reference terminal is worn by a user.

14. The device according to claim 13, the determining module (420) is further configured to:
if the wearing message sent from the reference terminal corresponding to the target account is not received in the preset period before obtaining the target message, determine the target terminal as the terminal which the user operates for the last time from the terminals logged into the target account.

15. A computer readable storage medium, having at least one instruction, at least one program, a code set or an instruction set stored thereon, wherein the least one instruction, the at least one program, the code set or the instruction set is configured to be loaded and performed by a processor to implement a method for sending messages according to any one of claims 1 to 7.

## Patentansprüche

1. Verfahren zum Senden von Nachrichten, das umfasst:
Erhalten (101) einer Zielnachricht, die an ein Zielkonto gesendet werden soll;
Ermitteln (102) eines Zielterminals, das einem dem Zielkonto entsprechenden Referenzterminal am nächsten ist, aus den am Zielkonto angemeldeten Terminals;
**gekennzeichnet durch**,
als Reaktion auf das Ermitteln,
Senden (103) der Zielnachricht an die am Zielkonto angemeldeten Terminals, und
Senden einer Befehlsnachricht an das Zielterminal, wobei die Befehlsnachricht so konfiguriert ist, dass sie das Zielterminal anweist, ein Aufforderungssignal für die Zielnachricht auszusenden.

2. Verfahren nach Anspruch 1, wobei das Ermitteln (102) eines Zielterminals, das einem dem Zielkonto entsprechenden Referenzterminal am nächsten ist, aus den am Zielkonto angemeldeten Terminals umfasst:
Erhalten von Standortinformationen jedes am Zielkonto angemeldeten Terminals und von Standortinformationen des dem Zielkonto entsprechenden Referenzterminals; und
Ermitteln des Zielterminals, das dem Referenzterminal am nächsten ist, gemäß den Standortinformationen jedes am Zielkonto angemeldeten Terminals und den Standortinformationen des Referenzterminals.

3. Verfahren nach Anspruch 2, wobei die Standortinformationen eine Standortkoordinate, ein betroffenes Gebäude und Etageninformationen in dem betroffenen Gebäude umfassen;
wobei das Ermitteln (102) des Zielterminals, das dem Referenzterminal am nächsten ist, gemäß den Standortinformationen jedes am Zielkonto angemeldeten Terminals und den Standortinforationen des Referenzterminals umfasst:
Ermitteln eines Zielterminals mit einer kürzesten Bewegungsdistanz zum Referenzterminal in den am Zielkonto angemeldeten Terminals gemäß den Standortinformationen jedes am Zielkonto angemeldeten Terminals und den Standortinformationen des Referenzterminals.

4. Verfahren nach einem der Ansprüche 1 bis 3, wobei das Ermitteln (102) eines Zielterminals, das einem dem Zielkonto entsprechenden Referenzterminal am nächsten ist, aus am Zielkonto angemeldeten Terminals umfasst:
Erhalten von Signalstärkeninformationen zwischen jedem am Zielkonto angemeldeten Terminal und dem Referenzterminal, das dem Zielkonto entspricht; und
Ermitteln des Zielterminals, das dem Referenzterminal am nächsten ist, basierend auf den Signalstärkeninformationen, die jedem am Zielkonto angemeldeten Terminal entsprechen.

5. Verfahren nach einem der Ansprüche 1 bis 4, wobei das Senden (103) der Zielnachricht an die am Zielkonto angemeldeten Terminals umfasst:
Senden der Zielnachricht an einen Teil von an dem Zielkonto angemeldeten Terminals,
wobei jedes des Teils von Terminals eine Distanz zum Referenzterminal aufweist, die kleiner als ein voreingestellter Schwellenwert ist.

6. Verfahren nach einem der Ansprüche 1 bis 5, wobei das Ermitteln (102) eines Zielterminals, das einem dem Zielkonto entsprechenden Referenzterminal am nächsten ist, aus den am Zielkonto angemeldeten Terminals umfasst:
wenn eine vom dem Zielkonto entsprechenden Referenzterminal gesendete Tragenachricht in einem voreingestellten Zeitraum vor dem Erhalt der Zielnachricht empfangen wird, Ermitteln des Zielterminals, das dem Referenzterminal, das dem Zielkonto entspricht, am nächsten ist, aus den am Zielkonto angemeldeten Terminals;
wobei die Tragenachricht periodisch von dem Referenzterminal in einer Situation gesendet wird, in der das Referenzterminal detektiert, dass das Referenzterminal von einem Benutzer getragen wird.

7. Verfahren nach Anspruch 6, ferner umfassend:
wenn die vom dem Zielkonto entsprechenden Referenzterminal gesendete Tragenachricht nicht in dem voreingestellten Zeitraum vor dem Erhalt der Zielnachricht empfangen wird, Bestimmen des Zielterminals als das Terminal, das der Benutzer zum letzten Mal bedient, aus den am Zielkonto angemeldeten Terminals.

8. Vorrichtung zum Senden von Nachrichten, die aufweist:
ein Erhaltmodul (410), das zum Erhalten einer Zielnachricht ausgebildet ist, die an ein Zielkonto gesendet werden soll;
ein Ermittlungsmodul (420), das so ausgebildet ist, dass es ein Zielterminal, das einem dem Zielkonto entsprechenden Referenzterminal am nächsten ist, aus am Zielkonto angemeldeten Terminals ermittelt; und
**gekennzeichnet durch**
ein Sendemodul (430), das so ausgebildet ist, dass es als Reaktion auf die Ermittlung die Zielnachricht an die am Zielkonto angemeldeten Terminals und eine Befehlsnachricht an das Zielterminal sendet,
wobei die Befehlsnachricht so konfiguriert ist, dass sie das Zielterminal anweist, ein Aufforderungssignal für die Zielnachricht auszusenden.

9. Vorrichtung nach Anspruch 8, wobei das Ermittlungsmodul (420) ausgebildet ist zum:
Erhalten von Standortinformationen jedes am Zielkonto angemeldeten Terminals und von Standortinformationen des dem Zielkonto entsprechenden Referenzterminals; und
Bestimmen des Zielterminals, das dem Referenzterminal am nächsten ist, gemäß den Standortinformationen jedes am Zielkonto angemeldeten Terminals und den Standortinformationen des Referenzterminals.

10. Vorrichtung nach Anspruch 9, wobei die Standortinformationen eine Standortkoordinate, ein betroffenes Gebäude und Etageninformationen in dem betroffenen Gebäude umfassen;
wobei das Ermittlungsmodul (420) ausgebildet ist zum:
Ermitteln eines Zielterminals mit einer kürzesten Bewegungsdistanz zum Referenzterminal in den am Zielkonto angemeldeten Terminals gemäß den Standortinformationen jedes am Zielkonto angemeldeten Terminals und den Standortinformationen des Referenzterminals.

11. Vorrichtung nach einem der Ansprüche 8 bis 10, wobei das Ermittlungsmodul (420) ausgebildet ist zum:
Erhalten von Signalstärkeninformationen zwischen jedem am Zielkonto angemeldeten Terminal und dem Referenzterminal, das dem Zielkonto entspricht; und
Ermitteln des Zielterminals, das dem Referenzterminal am nächsten ist, basierend auf den Signalstärkeninformationen, die jeden am Zielkonto angemeldeten Terminal entsprechen.

12. Vorrichtung nach einem der Ansprüche 8 bis 11, wobei das Sendemodul (430) ausgebildet ist zum:
Senden der Zielnachricht an einen Teil von an dem Zielkonto angemeldeten Terminals, wobei jedes des Teils von Terminals eine Distanz zum Referenzterminal aufweist, der kleiner als ein voreingestellter Schwellenwert ist.

13. Vorrichtung nach einem der Ansprüche 8 bis 12, wobei das Ermittlungsmodul (420) für Folgendes ausgebildet ist:
wenn eine vom dem Zielkonto entsprechenden Referenzterminal gesendete Tragenachricht in einem voreingestellten Zeitraum vor dem Erhalt der Zielnachricht empfangen wird, Ermitteln des Zielterminals, das dem Referenzterminal, das dem Zielkonto entspricht, am nächsten ist, aus den am Zielkonto angemeldeten Terminals;
wobei die Tragenachricht periodisch von dem Referenzterminal in einer Situation gesendet wird, in der das Referenzterminal erkennt, dass das Referenzterminal von einem Benutzer getragen wird.

14. Vorrichtung nach Anspruch 13, wobei das Ermittlungsmodul (420) ferner für Folgendes ausgebildet ist:
wenn die vom dem Zielkonto entsprechenden Referenzterminal gesendete Tragenachricht nicht in dem voreingestellten Zeitraum vor dem Erhalt der Zielnachricht empfangen wird, Ermitteln des Zielterminals als das Terminal, das der Benutzer zum letzten Mal bedient, aus den am Zielkonto angemeldeten Terminals.

15. Computerlesbares Speichermedium, auf dem mindestens einen Befehl, mindestens ein Programm, ein Codesatz oder ein Befehlssatz gespeichert sind, wobei der mindestens eine Befehl, das mindestens eine Programm, der Codesatz oder der Befehlssatz so konfiguriert sind, dass sie von einem Prozessor geladen und ausgeführt werden, um ein Verfahren zum Senden von Nachrichten nach einem der Ansprüche 1 bis 7 zu implementieren.

## Revendications

1. Procédé d'envoi de messages, comprenant :
l'obtention (101) d'un message cible à envoyer à un compte cible ;
la détermination (102) d'un terminal cible le plus proche d'un terminal de référence correspondant au compte cible à partir de terminaux connectés au compte cible ; **caractérisé en ce que**,
en réponse à la détermination,
l'envoi (103) du message cible aux terminaux connectés au compte cible, et l'envoi d'un message d'instruction au terminal cible, le message d'instruction étant configuré pour ordonner au terminal cible d'envoyer un signal d'invite pour le message cible.

2. Procédé selon la revendication 1, dans lequel la détermination (102) d'un terminal cible le plus proche d'un terminal de référence correspondant au compte cible à partir de terminaux connectés au compte cible comprend :
l'obtention d'informations de localisation de chaque terminal connecté au compte cible et d'informations de localisation du terminal de référence correspondant au compte cible ; et
la détermination du terminal cible le plus proche du terminal de référence selon les informations de localisation de chaque terminal connecté au compte cible et les informations de localisation du terminal de référence.

3. Procédé selon la revendication 2, dans lequel les informations de localisation comprennent une coordonnée d'emplacement, un bâtiment concerné et des informations d'étage dans le bâtiment concerné ;
la détermination (102) du terminal cible le plus proche du terminal de référence selon des informations de localisation de chaque terminal connecté au compte cible et des informations de localisation du terminal de référence comprend :
la détermination d'un terminal cible ayant une distance de déplacement la plus courte du terminal de référence dans les terminaux connectés au compte cible selon les informations de localisation de chaque terminal connecté au compte cible et les informations de localisation du terminal de référence.

4. Procédé selon l'une quelconque des revendications 1 à 3, dans lequel la détermination (102) d'un terminal cible le plus proche d'un terminal de référence correspondant au compte cible à partir de terminaux connectés au compte cible comprend :
l'obtention d'informations d'intensité de signal entre chaque terminal connecté au compte cible et le terminal de référence correspondant au compte cible ; et
la détermination du terminal cible le plus proche du terminal de référence en fonction des informations d'intensité de signal correspondant à chaque terminal connecté au compte cible.

5. Procédé selon l'une quelconque des revendications 1 à 4, dans lequel l'envoi (103) du message cible aux terminaux connectés au compte cible comprend :
l'envoi du message cible à une partie des terminaux connectés au compte cible, chacune de la partie des terminaux ayant une distance inférieure à un seuil prédéfini à partir du terminal de référence.

6. Procédé selon l'une quelconque des revendications 1 à 5, dans lequel la détermination (102) d'un terminal cible le plus proche d'un terminal de référence correspondant au compte cible à partir de terminaux connectés au compte cible comprend :
si un message de port envoyé depuis le terminal de référence correspondant au compte cible est reçu dans une période prédéfinie avant l'obtention du message cible, la détermination du terminal cible le plus proche du terminal de référence correspondant au compte cible à partir des terminaux connectés au compte cible ;
dans lequel le message de port est périodiquement envoyé par le terminal de référence dans une situation dans laquelle le terminal de référence détecte que le terminal de référence est porté par un utilisateur.

7. Procédé selon la revendication 6, comprenant en outre :
si le message de port envoyé depuis le terminal de référence correspondant au compte cible n'est pas reçu dans la période prédéfinie avant l'obtention du message cible, la détermination du terminal cible comme terminal que l'utilisateur exploite pour la dernière fois à partir des terminaux connectés au compte cible.

8. Dispositif d'envoi de messages, comprenant :
un module d'obtention (410), configuré pour obtenir un message cible à envoyer à un compte cible ;
un module de détermination (420), configuré pour déterminer un terminal cible le plus proche d'un terminal de référence correspondant au compte cible à partir de terminaux connectés au compte cible ; et
**caractérisé par**
un module d'envoi (430), configuré pour envoyer, en réponse à la détermination, le message cible aux terminaux connectés au compte cible, et un message d'instruction au terminal cible,
dans lequel le message d'instruction est configuré pour ordonner au terminal cible d'envoyer un signal d'invite pour le message cible.

9. Dispositif selon la revendication 8, dans lequel le module de détermination (420) est configuré pour :
obtenir des informations de localisation de chaque terminal connecté au compte cible et des informations de localisation du terminal de référence correspondant au compte cible ; et
déterminer le terminal cible le plus proche du terminal de référence selon les informations de localisation de chaque terminal connecté au compte cible et les informations de localisation du terminal de référence.

10. Dispositif selon la revendication 9, dans lequel les informations de localisation comprennent une coordonnée d'emplacement, un bâtiment concerné et des informations d'étage dans le bâtiment concerné ;
le module de détermination (420) est configuré pour :
déterminer un terminal cible ayant la distance de déplacement la plus courte du terminal de référence dans les terminaux connectés au compte cible selon les informations de localisation de chaque terminal connecté au compte cible et les informations de localisation du terminal de référence.

11. Dispositif selon l'une quelconque des revendications 8 à 10, dans lequel le module de détermination (420) est configuré pour :
obtenir des informations d'intensité de signal entre chaque terminal connecté au compte cible et le terminal de référence correspondant au compte cible ; et
déterminer le terminal cible le plus proche du terminal de référence sur la base des informations d'intensité de signal correspondant à chaque terminal connecté au compte cible.

12. Dispositif selon l'une quelconque des revendications 8 à 11, dans lequel le module d'envoi (430) est configuré pour :
envoyer le message cible à une partie des terminaux connectés au compte cible, chacune de la partie des terminaux ayant une distance inférieure à un seuil prédéfini à partir du terminal de référence.

13. Dispositif selon l'une quelconque des revendications 8 à 12, dans lequel le module de détermination (420) est configuré pour :
si un message de port envoyé depuis le terminal de référence correspondant au compte cible est reçu dans une période prédéfinie avant l'obtention du message cible, déterminer le terminal cible le plus proche du terminal de référence correspondant au compte cible à partir des terminaux connectés au compte cible ;
dans lequel le message de port est périodiquement envoyé par le terminal de référence dans une situation dans laquelle le terminal de référence détecte que le terminal de référence est porté par un utilisateur.

14. Dispositif selon la revendication 13, le module de détermination (420) est en outre configuré pour :
si le message de port envoyé depuis le terminal de référence correspondant au compte cible n'est pas reçu dans la période prédéfinie avant l'obtention du message cible, déterminer le terminal cible comme terminal que l'utilisateur exploite pour la dernière fois à partir des terminaux connectés au compte cible.

15. Support de stockage lisible par ordinateur, sur lequel est stocké au moins une instruction, au moins un programme, un ensemble de codes ou un ensemble d'instructions, l'au moins une instruction, l'au moins un programme, l'ensemble de codes ou l'ensemble d'instructions étant configuré pour être chargé et exécuté par un processeur pour mettre en œuvre un procédé d'envoi de messages selon l'une quelconque des revendications 1 à 7.
